# EUROPÄISCHE PATENTANMELDUNG

(11) **EP 3 495 201 A1**
(43) Veröffentlichungstag der Anmeldung: **12.06.2019**
(21) Anmeldenummer: 17205720.0
(22) Anmeldetag: 06.12.2017
(51) Int. Cl.: B60P 1/28

(54) **MULDENKÖRPER FÜR EIN NUTZFAHRZEUG**

(71) Anmelder: Schmitz Cargobull AG, 48341 Altenberge (DE)
(72) Erfinder: Reinhardt, Frank, 99947 Bad Langensalza (DE); Yalcin, Ertugrul, 89312 Günzburg (DE)
(74) Vertreter: Baur & Weber Patentanwälte PartG mbB

(57) **Zusammenfassung**

Beschrieben wird ein Muldenkörper (MK) für ein Nutzfahrzeug, insbesondere für einen Muldenkipper oder für einen Sattelauflieger, der ein in einer Längsrichtung (LR) gestrecktes Beladevolumen (BV) umschließt und ein das Beladevolumen (BV) nach unten begrenzendes Bodenelement (BE) umfasst, dadurch gekennzeichnet, dass das Bodenelement (BE) einen flächenhaften ersten Untergurt (UG1) und einen flächenhaften zweiten Untergurt (UG2) aufweist, zwischen denen über jeweils eine Zarge (ZR) ein flächenhafter, entlang der Längsrichtung (LR) orientierter und aus der Ebene der Untergurte (UG1, UG2) vorspringender Obergurt (OG) angeordnet ist.

## Beschreibung

Die Erfindung betrifft einen Muldenkörper für ein Nutzfahrzeug, insbesondere für einen Muldenkipper oder für einen Sattelauflieger.

Aus dem allgemeinen Stand der Technik ist es bekannt, auf einem Nutzfahrzeug bzw. auf einem Auflieger für eine Sattelzugmaschine eine kippbare Mulde anzuordnen, um loses Schüttgut zu transportieren und am Bestimmungsort abzuladen. Derartige Fahrzeuge werden typischerweise mit wannenförmigen oder halbrunden Seitenwänden aus Stahl oder Aluminium gefertigt, wobei zum Transport von Asphalt für den Straßenbau auch thermoisolierte Mulden, die darüber hinaus auch beheizbar sein können, bekannt sind. Beheizbare Mulden werden auch eingesetzt, um ein Festfrieren von feuchtem Schüttgut bei niedrigen Temperaturen zu verhindern.

Aus der DE 35 10 240 A1 ist ein Lastwagen mit einem Antrieb durch eine Verbrennungskraftmaschine mit einem Auflieger zum Transport von Schüttgütern in einem Muldenaufbau bekannt, dessen Mulde Hohlprofilabschnitte aufweist, wobei ein Bestandteil des Muldenaufbaus mit mehreren Hohlprofilen ein Rohrsystem einer Abgasheizung bildet.

Eine Anhängermulde mit Abgasheizung durch ein Heizelement, welches Bestandteil des Muldenaufbaus ist und tragende Profilabschnitte aufweist, ist auch aus der DE 88 03 549 U1 bekannt.

Die für die Zuführung der Abgase bereitgestellten Profile weisen als weiteren Effekt eine mechanische Versteifung der Mulde auf, so dass derartige Profile oftmals auch ohne die Zuführung der Abgase montiert sind.

Aus der DE 20 2011 000 523 U1 ist ein Kippmuldenfahrzeug mit einer im Fahrbetrieb langgestreckten Kippmulde bekannt, welche einen Muldenkörper mit fest verbundenem Vorderwandmodul, Bodenmodul und zwei Seitenwandmodulen und eine heckseitig verschließbar Öffnung umfasst und Blechflächen mit Reliefstrukturen als Seitenwände aufweist. Die Reliefstrukturen sind in den Blechflächen durch Ausdrückungen aus der Blechfläche ausgebildet.

Aus der DE 71 17 581 U ist eine Mulde für einen Absetzkipper bekannt, die mehrere Sicken aufweist.

Derartige Sicken werden üblicherweise am Boden der Mulde als parallel laufende Dreieck-Sicken ausgebildet und dienen auch zur Unterstützung der Zerkleinerung beispielsweise von Bauschutt.

Ausgehend von diesem Stand der Technik hat sich der Erfinder nun die Aufgabe gestellt, bereits bekannte Kippmulden weiter zu verbessern, um insbesondere die mechanische Stabilität einer derartigen Kippmulde zu steigern.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Muldenkörper für ein Nutzfahrzeug, insbesondere für einen Muldenkipper oder für einen Sattelauflieger, angegeben, der ein in einer Längsrichtung gestrecktes Beladevolumen umschließt und ein das Beladevolumen nach unten begrenzendes Bodenelement umfasst, dadurch gekennzeichnet, dass das Bodenelement einen flächenhaften ersten Untergurt und einen flächenhaften zweiten Untergurt aufweist, zwischen denen über jeweils eine Zarge ein flächenhafter, entlang der Längsrichtung orientierter und aus der Ebene der Untergurte vorspringender Obergurt angeordnet ist. Der Obergurt kann vorzugsweise in Richtung des Beladevolumens vorspringend angeordnet sein.

Demnach weicht die Erfindung von dem bisher aus dem Stand der Technik bekannten Konzept eines Muldenkörpers mit einem flachen Boden dahingehend ab, dass nun ein in Richtung des Beladevolumens vorspringender Obergurt vorgesehen ist. Der Muldenkörper weist daher an seinem Boden im Bereich des Obergurts eine Stufe auf, die zu einer Aussteifung des Muldenkörpers führt. Der heute lediglich bezüglich der Stabilität des Muldenkörpers aber nicht mehr funktional für Abgasheizungen genutzte Heizkanal unterhalb des Muldenkörpers kann daher entfallen. Folglich wird ein Muldenkörper geschaffen, der bezüglich seiner Stabilitätausgestaltungen mit Heizkanal vergleichbar oder überlegen ist, wobei ein erfindungsgemäßer Muldenkörper aufgrund der geringeren Komplexität kostengünstiger zu fertigen ist. Es zeigt sich überraschend, dass flache Untergurte und in das Beladevolumen vorspringende Obergurte ein Entfernen von Schüttgut rückstandsfrei ermöglichen und darüber hinaus die gewünschte Aussteifung des Muldenkörpers erreichen können.

Gemäß Ausführungsformen der Erfindung ist es vorgesehen, dass das Bodenelement mehrere Obergurte aufweist, die durch weitere Untergurte getrennt sind. Die Obergurte können in die gleiche Richtung vorspringend angeordnet sein.

Ein Muldenkörper kann mehrere vorspringende Obergurte aufweisen, zwischen denen weitere Untergurte angeordnet sind, so dass anstelle eines Obergurtes, der die vormals übliche Ausgestaltung mit einem Heizkanal nachbildet, mehrere derartige Strukturen vorgesehen sind. Diese werden vorzugsweise in die gleiche Richtung vorspringend angeordnet, so dass alle Obergurte entweder in Richtung des Beladevolumens oder dazu entgegengesetzt ausgebildet sind. Eine Mischform mit sowohl in Richtung des Beladevolumens und dazu entgegengesetzt orientierter Obergurte ist ebenfalls möglich.

Gemäß weiteren Ausführungsformen der Erfindung ist es vorgesehen, dass der Obergurt oder die Obergurte im Wesentlichen vollständig entlang der Längsrichtung des Muldenkörpers ausgebildet ist. Darüber hinaus kann der Obergurt mittig oder die Obergurte symmetrisch zwischen Seitenwänden entlang der Längsrichtung angeordnet sein. Die Untergurte, die Zargen und der Obergurt können jeweils ein trapezförmiges Profil umschließen.

In diesen Ausgestaltungen folgt nur eine geringfügige Abweichung von einer flachen Ausgestaltung des Bodens, so dass Festsetzen von Schüttgut bei gleichzeitig erhöhter Steifigkeit beobachtet wird.

Gemäß einer weiteren Ausführungsform der Erfindung sind die Untergurte und der Obergurt im Bodenelement durch Biegen oder Kanten entlang vier parallel zueinander angeordneter Schwenkachsen gebildet.

Auf diese Weise lässt sich der in Richtung des Beladevolumens vorspringende Obergurt auf einfache Weise durch mehrfaches, insbesondere vierfaches Kanten eines einzelnen Bauteils bilden.

Gemäß einer weiteren Ausführungsform der Erfindung sind Obergurt und Zargen als Sicke, vorzugsweise als Trapez- oder Kastensicke ausgebildet.

Neben der Herstellung des vorspringenden Obergurts durch Biegen lässt sich auch mittels eines Pressverfahrens eine erfindungsgemäße Ausgestaltung des Bodenelements durchführen. Zusätzlich oder alternativ zu dem oben beschriebenen Biegeverfahren steht somit ein weiteres Kaltumformverfahren zur Verfügung, wobei in manchen Anwendungsfällen eventuell auftretende Ausdünnung im Bereich der Zargen zusätzliche Versteifungsmaßnahmen erfordern können.

Gemäß einer weiteren Ausführungsform der Erfindung bleiben ein Abstand vom ersten Untergurt zum zweiten Untergurt sowie eine Breite des Obergurts entlang der Längsrichtung gleich. Der Abstand zwischen Obergurt und den Untergurten kann entlang der Längsrichtung konstant sein.

Diese Ausführungsformen eignen sich sowohl für die Herstellung mittels eines Biegeverfahrens als auch durch Pressen. Da der Muldenkörper entlang der Längsrichtung im Bereich des Bodenelements gleichförmig ausgebildet ist, lässt sich ein besonders einfacher Aufbau erzielen.

Gemäß einer weiteren Ausführungsform der Erfindung ist der Flächenschwerpunkt aus Untergurten und Obergurt anhand einer vorgegebenen Biegebelastung gewählt, wobei vorzugsweise der Abstand zwischen Obergurt und Untergurten kleiner als der Abstand zwischen den Untergurten gewählt ist.

Anhand der Ausgestaltung der Untergurte und des Obergurts lässt sich bei vorgegebener Biegebelastung die Steifigkeit des Bodenelements beeinflussen, wobei in einer bevorzugten Ausführungsform ein nur geringfügig aus der Ebene der Untergurte herausragender Obergurt bereitgestellt wird. Dies ist insbesondere auch dann vorteilhaft, wenn das Bodenelement befahren oder begangen werden soll, da sich aufgrund dieser Ausgestaltung lediglich eine geringfügige Stufe im Bereich des Bodens des Muldenkörpers ergibt. Somit kann auch ein Beladen beispielsweise mit Palettenware unter Zuhilfenahme eines Hubstaplers möglich sein. Gemäß einer weiteren Ausführungsform der Erfindung ist das Bodenelement aus Stahlblech gefertigt. Der Muldenkörper kann dabei wannenförmig ausgebildet sein.

Zusätzlich können an den Zargen quer zur Längsrichtung angeordnete Streben den Bereich zwischen den Untergurten und unterhalb des Obergurts überdecken.

Neben einer zusätzlichen Versteifung können die Streben beispielsweise durch Anbringen von Öffnungen auch zur Verlegung von Leitungen der Fahrzeugelektrik oder Hydraulik dienen, so dass ein oder mehr Leitungskanäle bereitgestellt werden.

Nachfolgend werden einige Ausführungsbeispiele anhand der Zeichnung näher erläutert. Es zeigen:
- Fig. 1: ein erfindungsgemäßer Muldenkörper in einer ersten perspektivischen Ansicht,
- Fig. 2: der Muldenkörper aus Fig. 1 in einer weiteren perspektivischen Ansicht,
- Fig. 3: der Muldenkörper aus Fig. 1 in einer ersten teilweise gebrochenen Darstellung und
- Fig. 4: der Muldenkörper aus Fig. 1 in einer zweiten teilweise gebrochenen Darstellung.

In den Figuren sind gleiche oder funktional gleich wirkende Bauteile mit den gleichen Bezugszeichen versehen.

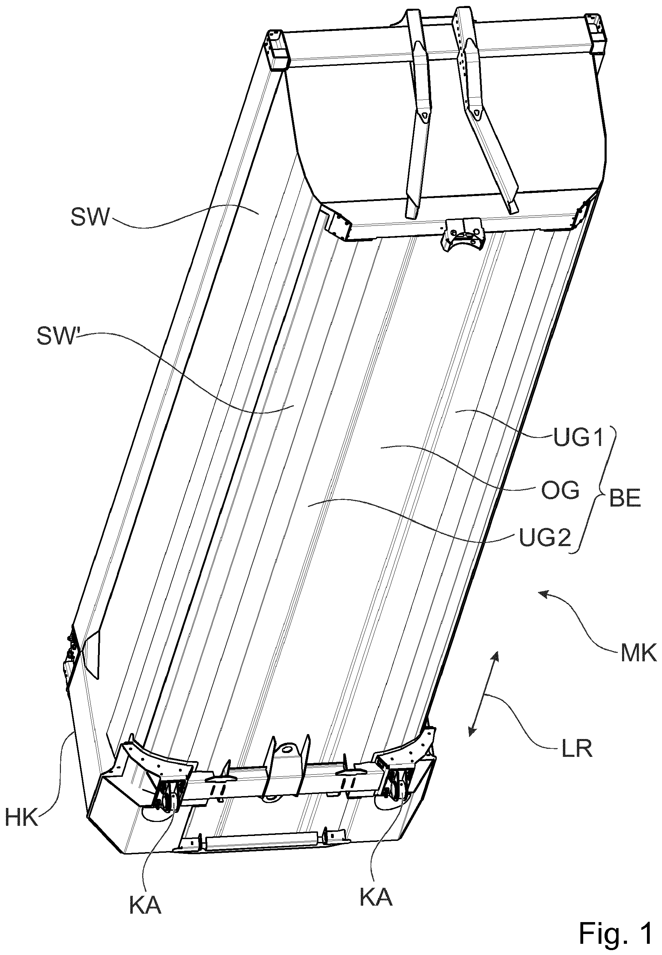

In Fig. 1 ist ein Muldenkörper MK gezeigt, der beispielsweise auf einen Muldenkipper oder einen Sattelauflieger aufgebracht werden kann. Der Muldenkörper MK ist in Fig. 1 von der Unterseite her dargestellt, wobei die Blickrichtung schräg gegen eine Vorwärtsfahrtrichtung gewählt ist. Der Muldenkörper MK ist entlang einer Längsrichtung LR gestreckt ausgeführt und wird an seiner Vorderseite von einer Vorderwand VW und an seiner Hinterseite von einer typischerweise verschließbaren Heckklappe HK begrenzt.

Zwischen Vorderwand VW und Heckklappe HK sind seitlich Seitenwände SW angebracht, die zur Unterseite hin in ein Bodenelement BE münden. Dazu können, wie in Fig. 1 eingezeichnet ist, mehrere weitere Seitenwände SW' zwischen der Seitenwand SW und dem Bodenelement BE angeordnet sein, so dass sich insgesamt ein wannenförmiger Querschnitt des Muldenkörpers MK ergibt. Der Muldenkörper MK definiert somit ein Beladevolumen, das beispielsweise zum Transport von Schüttgut herangezogen werden kann.

Bei geöffneter Heckklappe HK kann das Schüttgut heckseitig durch Aufstellen des Muldenkörpers MK auf einem Nutzfahrzeug oder einem Sattelauflieger in bekannter Weise entleert werden, wobei der Muldenkörper MK über die Kippachsen KA mit dem Fahrzeug oder dem Auflieger in Verbindung gebracht werden kann.

Das Bodenelement BE wird gemäß der Erfindung von einem ersten Untergurt UG1, einem zweiten Untergurt UG2 und einem dazwischen liegenden Obergurt OG gebildet. Der Obergurt OG ist in Bezug zum ersten Untergurt UG1 und dem zweiten Untergurt UG2 in Richtung des Beladevolumens versetzt. Neben der Ausführungsform mit einem Obergurt OG sind auch Varianten mit mehreren Obergurten möglich. Der Obergurt OG, der erste Untergurt UG1 und der zweite Untergurt UG2 sind dabei jeweils flächenhaft ausgebildet. Der Begriff "flächenhaft" wird dabei so verstanden, dass der Obergurt OG, der erste Untergurt UG1 und der zweite Untergurt UG2 keine Strukturierung in Form von Rillen oder Keilen aufweisen. In sich können Der Obergurt OG, der erste Untergurt UG1 und der zweite Untergurt UG2 jeweils auch geringfügig gekrümmt sein, was insbesondere bei einem wannenförmigen Muldenkörper MK möglich ist.

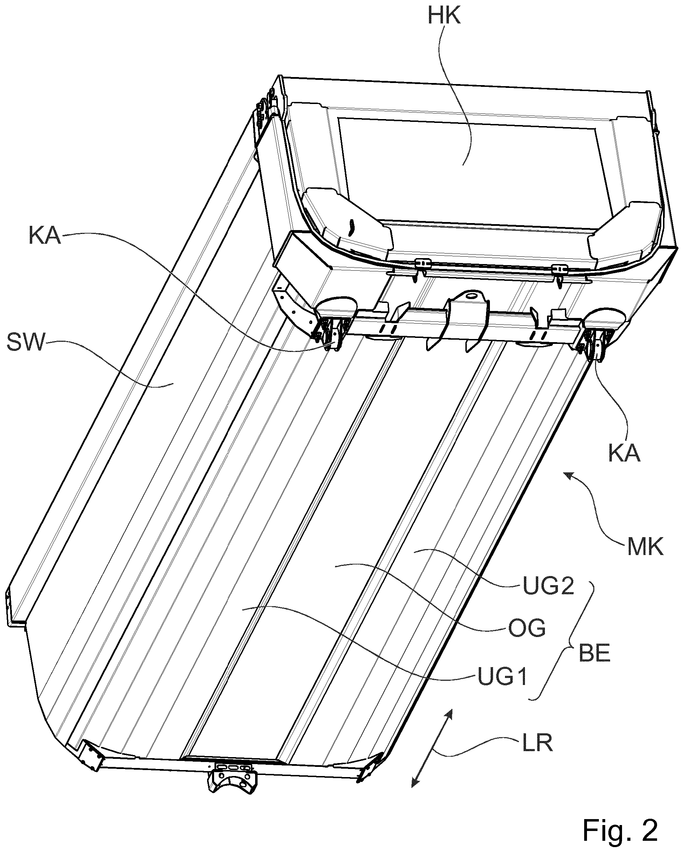

In Fig. 2 ist der Muldenkörper MK aus Fig. 1 nochmals aus einer anderen Richtung mit Blick auf die Heckklappe HK dargestellt. Man erkennt, dass der Muldenkörper MK entlang der Längsrichtung LR im Wesentlichen gleichförmig aufgebaut ist, so dass sich insbesondere im Bereich des Bodenelements BE bei gedachten Schnitten quer zur Längsrichtung LR jeweils identische Querschnittsprofile ergeben würden.

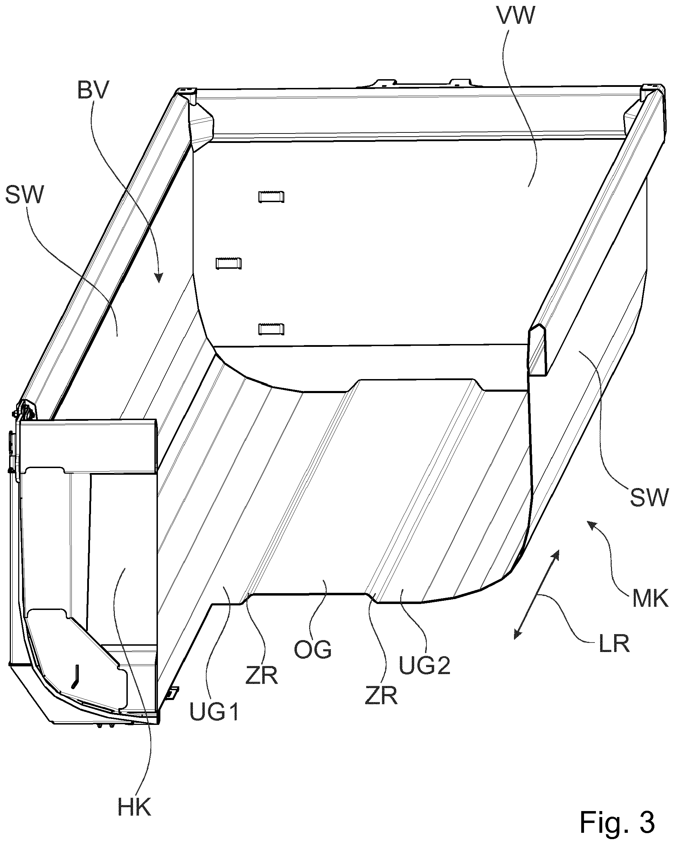

Zur Verdeutlichung der Ausgestaltung der Untergurte UG1 und UG2 bzw. des Obergurts OG wird nachfolgend unter Bezugnahme auf Fig. 3 eine teilweise gebrochene Darstellung des Muldenkörpers MK gewählt. In der Darstellung nach Fig. 3 ist das Beladevolumen BV aus Richtung der Heckklappe HK dargestellt, wobei die Unterseite des Muldenkörpers MK von dem ersten Untergurt UG1, dem Obergurt OG und dem zweiten Untergurt UG2 gebildet wird, wobei zwischen den Untergurten UG1 bzw. UG2 und dem Obergurt OG jeweils Zargen ZR angeordnet sind. Diese Ausgestaltung führt zu einem in etwa trapezförmigen Querschnitt im Bereich der Untergurte UG1 und UG2 sowie des Obergurts OG.

Der Obergurt OG ist dabei in Richtung des Beladevolumens BV vorspringend angeordnet, so dass sich im Bereich der Zargen ZR eine geringfügige Stufe zwischen dem jeweils benachbarten Untergurt UG1 bzw. UG2 und dem Obergurt OG ergibt. Die Abmessungen der Zargen ZR quer zur Längsrichtung LR sind dabei im Verhältnis zur Breite des Obergurts OG relativ gering gewählt, so dass die somit gebildete Stufe beispielsweise mittels eines Hubwagens befahren werden kann.

Typische Abmessungen sehen einen Versatz der Ebene des ersten Untergurts UG1 und des zweiten Untergurts UG2 relativ zum Obergurt OG im Bereich von 30 bis 50 mm vor. Als Abstand zwischen den Untergurten UG1 und UG2, was der Breite des Obergurts OG entspricht, ist eine Abmessung in etwa von 600 mm vorgesehen. Somit ergibt sich ein Muldenkörper MK, dessen Unterseite aufgrund der trapezförmigen Ausgestaltung im Vergleich zu einer flachen Bauform eine erhöhte Steifigkeit aufweist, wobei die Dimensionierung der Untergurte UG1 und UG2 sowie des Obergurts OG so gewählt werden kann, dass eine gewünschte Steifigkeit erreicht wird, indem beispielsweise die Flächenschwerpunkte entsprechend gewählt werden.

Die Ausgestaltung des Muldenkörpers MK mit einem in Richtung des Beladevolumens BV zeigenden Obergurt OG lässt sich auf einfache Weise beispielsweise durch vierfaches Umknicken aus einem Stahlblechzuschnitt erstellen. Typischerweise werden dabei der Versatz des Obergurts OG relativ zu den Untergurten UG1 und UG2 sowie der Abstand der Untergurte UG1 und UG2 zueinander entlang der Längsrichtung LR konstant sein. In einer anderen Ausführungsform könnte auch mittels eines Pressverfahrens eine trapezförmige Sicke als Untergurt UG1 und UG2, Zargen ZR und Obergurt OG ausgebildet werden.

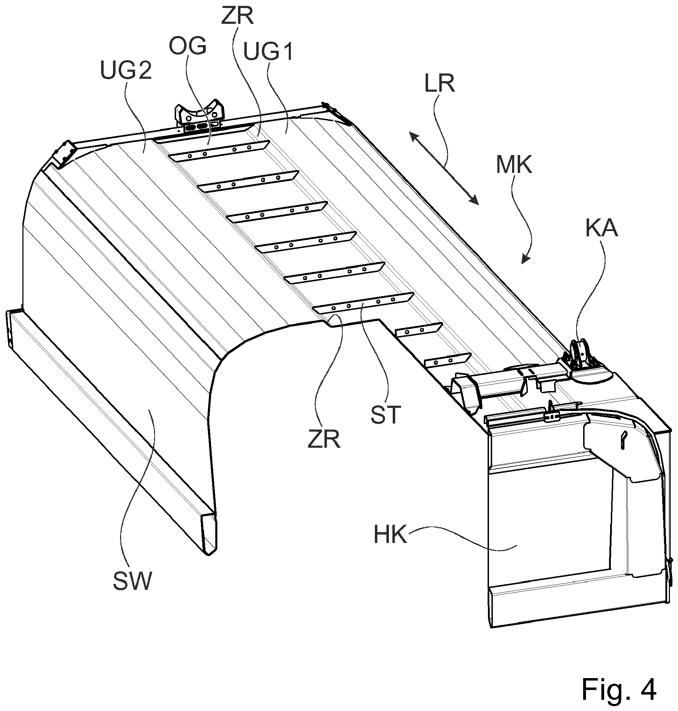

In Fig. 4 ist nochmals eine weitere Ausführungsform der Erfindung gezeigt. Diese unterscheidet sich von den bisherigen Ausführungsformen dadurch, dass der durch den Obergurt OG vorspringende Bereich zwischen dem ersten Untergurt UG1 und dem zweiten Untergurt UG2 mittels quer zur Längsrichtung LR angeordneter Streben ST überdeckt wird. Die Streben ST sorgen dabei für eine zusätzliche Versteifung des Muldenkörpers MK und können beispielsweise im Bereich der Zargen ZR sowie des Obergurts OG festgeschweißt sein. Wie in Fig. 4 gezeigt ist, können dabei mehrere Streben ST, die beispielsweise mit konstantem Abstand entlang der Längsrichtung LR angeordnet sind, am Muldenkörper MK befestigt sein. Durch Öffnungen in den Streben ST können beispielsweise Leitungen der Fahrzeugelektrik oder Hydraulik verlegt werden, so dass unterhalb des Obergurts OG ein oder mehrere Leitungskanäle bereitgestellt werden können.

Der erfindungsgemäße Muldenkörper MK ermöglicht somit eine einfache Fertigung bei gleichzeitig verbesserter Steifigkeit, ohne dabei auf die im Stand der Technik beschriebenen Heizkanäle zurückgreifen zu müssen, die von einer Unterseite her in aufwändigen Bearbeitungsschritten an dem Muldenkörper MK angefügt werden müssen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Muldenkörper für ein Nutzfahrzeug, insbesondere für einen Muldenkipper oder für einen Sattelauflieger, der ein in einer Längsrichtung (LR) gestrecktes Beladevolumen (BV) umschließt und ein das Beladevolumen (BV) nach unten begrenzendes Bodenelement (BE) umfasst, **dadurch gekennzeichnet, dass** das Bodenelement (BE) einen flächenhaften ersten Untergurt (UG1) und einen flächenhaften zweiten Untergurt (UG2) aufweist, zwischen denen über jeweils eine Zarge (ZR) ein flächenhafter, entlang der Längsrichtung (LR) orientierter und aus der Ebene der Untergurte (UG1, UG2) vorspringender Obergurt (OG) angeordnet ist.

2. Muldenkörper nach Anspruch 1, bei dem der Obergurt (OG) in Richtung des Beladevolumens (BV) vorspringend angeordnet ist.

3. Muldenkörper nach Anspruch 1 oder 2, bei dem das Bodenelement (BE) mehrere Obergurte (OG) aufweist, die durch weitere Untergurte getrennt sind.

4. Muldenkörper nach Anspruch 3, bei dem die Obergurte (OG) in die gleiche Richtung vorspringend angeordnet sind.

5. Muldenkörper nach einem der Ansprüche 1 bis 4, bei dem der Obergurt (OG) mittig oder die Obergurte im Wesentlichen vollständig entlang der Längsrichtung (LR) des Muldenkörpers (MK) ausgebildet ist.

6. Muldenkörper nach einem der Ansprüche 1 bis 5, bei dem der Obergurt (OG) mittig oder die Obergurte symmetrisch zwischen Seitenwänden (SW) entlang der Längsrichtung (LR) angeordnet ist.

7. Muldenkörper nach einem der Ansprüche 1 bis 6, bei dem die Untergurte (UG1, UG2), die Zargen (ZR) und der Obergurt (OG) ein trapezförmiges Profil umschließen.

8. Muldenkörper nach einem der Ansprüche 1 bis 7, bei dem die Untergurte (UG1, UG2) und der Obergurt (OG) im Bodenelement (BE) durch Biegen entlang vier parallel zueinander angeordneter Schwenkachsen gebildet sind.

9. Muldenkörper nach einem der Ansprüche 1 bis 7, bei dem Obergurt (OG) und Zargen (ZR) als Sicke, vorzugsweise als Trapez- oder Kastensicke ausgebildet sind.

10. Muldenkörper nach einem der Ansprüche 1 bis 9, bei dem ein Abstand vom ersten Untergurt (UG1) zum zweiten Untergurt (UG2) sowie eine Breite des Obergurts (OG) entlang der Längsrichtung (LR) gleich bleiben.

11. Muldenkörper nach einem der Ansprüche 1 bis 10, bei dem der Abstand zwischen Obergurt (OG) und den Untergurten (UG1, UG2) entlang der Längsrichtung konstant ist.

12. Muldenkörper nach einem der Ansprüche 1 bis 11, bei dem der Flächenschwerpunkt aus Untergurten (UG1, UG2) und Obergurt (OG) anhand einer vorgegebenen Biegebelastung gewählt ist, wobei vorzugsweise der Abstand zwischen Obergurt (OG) und Untergurten (UG1, UG2) kleiner als der Abstand zwischen den Untergurten (UG1, UG2) gewählt ist.

13. Muldenkörper nach einem der Ansprüche 1 bis 12, bei dem wenigstens das Bodenelement (BE) aus Stahlblech gefertigt ist.

14. Muldenkörper nach einem der Ansprüche 1 bis 13, bei dem an den Zargen (ZR) quer zur Längsrichtung angeordnete Streben (ST) den Bereich zwischen den Untergurten (UG1, UG2) und unterhalb des Obergurts (OG) überdecken.

15. Muldenkörper nach einem der Ansprüche 1 bis 14, bei dem der Muldenkörper (MK) wannenförmig ausgebildet ist.
